# FASCICULE DE BREVET EUROPEEN

(11) **EP 3 478 400 B1**
(45) Date de publication et mention de la délivrance du brevet: **02.09.2020**
(21) Numéro de dépôt: 17765204.7
(22) Date de dépôt: 03.07.2017
(51) Int. Cl.: B01J 2/02, B01J 2/08

(54) **PROCEDE CONTINU ET INSTALLATION DE FABRICATION D'UN AEROGEL**
VERFAHREN UND ANLAGE ZUR KONTINUIERLICHEN AEROGELHERSTELLUNG
METHOD AND DEVICE FOR CONTINUOUS AEROGEL PRODUCTION

(30) Priorité: 04.07.2016 FR 1670366
(43) Date de publication de la demande: 08.05.2019
(73) Titulaire: Keey Aerogel, 68440 Schlierbach (FR)
(72) Inventeur: RUIZ, Francisco, 4058 Basel (CH); CLAVIER, Jean-Yves, 75014 Paris 14ème (FR)
(74) Mandataire: Hege, Frédéric
(86) Numéro de dépôt international: PCT/FR2017/051802
(87) Numéro de publication internationale: WO 2018/007740

(56) Documents cités:
- WO-A2-2006/016981
- US-A- 2 463 467

## Description

La présente invention se situe dans le domaine des matériaux. Elle concerne plus particulièrement un procédé continu de fabrication d'un aérogel.

L'aérogel est un matériau solide dont la structure consiste en une matrice poreuse dans laquelle une majorité de pores présentent un diamètre compris entre 2 et 50 nm (mésopores). Grâce à cela, on peut espérer obtenir des propriétés exceptionnelles, tel qu'une porosité élevée (-95%), une surface spécifique élevée (jusqu'à 1000 m² / g), une faible conductivité thermique (∼ 0,01 W / m.K), un faible indice de réfraction (∼ 1,05), et une transmission optique élevée (90%). Il est par exemple très performant comme isolant thermique. La production d'aérogel est basée sur la transformation d'une solution colloïdale moléculaire ou similaire en un gel réticulé. En fonction de la nature des précurseurs, les aérogels peuvent être inorganiques (p. ex. précurseurs à base d'oxydes de silicium, zirconium ou titane), organiques (à savoir à base de polymères de résorcinol-formaldéhyde, de polyuréthane ou de cellulose) ou hybrides (obtenus à partir de précurseurs organo-minéraux ou par combinaison).

L'aérogel est obtenu en remplaçant la partie liquide d'un gel par du gaz, au cours d'une étape dite de séchage. Cette transformation nécessite un procédé et une installation très lourds, et donc un coût de production élevé. En effet, afin de produire un aérogel de qualité, l'étape de séchage doit être réalisée sans générer un système biphasique avec ses forces capillaires associées, qui causeraient la destruction partielle ou totale de la nanostructure du gel. C'est pourquoi elle doit avoir lieu dans un environnement supercritique (SCD, supercritical drying), à température et pression élevées. Ceci n'est pas adapté à une production industrielle efficace, notamment parce que l'introduction du produit dans le module de séchage supercritique se fait par lots (batchs). Afin de produire des quantités industrielles d'aérogel à un coût raisonnable, l'étape de séchage peut être réalisée à pression ambiante (APD, Ambient Pressure Drying), mais du fait de l'évaporation du solvant, la qualité du produit est alors compromise, et cela provoque d'autres difficultés reliées à la nécessaire modification chimique du produit. De plus, la production d'aérogel à partir d'un précurseur nécessitant différentes étapes, elles sont souvent effectuées individuellement, et parfois par différents acteurs, dans des lieux différents, ce qui augmente encore les délais et coûts de production, ainsi que les risques induits par les changements d'état sur la qualité finale du produit.

Le document US6670402B1 propose une méthode de production d'aérogel accélérée, grâce à l'injection de CO₂ supercritique lors de l'étape de séchage, l'envoi d'ondes de pression, et l'utilisation d'un gaz non réactif et non condensable (NRNC) lors de la dépressurisation. Cependant la méthode décrite utilise un extracteur, qui fonctionne par lots de façon discontinue.

La présente invention a pour objet de pallier au moins en partie à ces inconvénients. A cet effet, elle propose un procédé de fabrication d'un aérogel en granulés à partir d'un précurseur, comportant les étapes suivantes :
- mélange du précurseur avec un solvant de synthèse et un agent d'hydrolyse tel que l'eau, et le cas échéant un catalyseur, pour obtenir un gel,
- granulation du produit obtenu, en particulier par découpe d'un jet dudit gel, pour obtenir des granulés,
- maintien des granulés en contact avec le solvant de synthèse et l'agent d'hydrolyse,
- lavage des granulés par ajout d'un solvant de lavage pour en extraire notamment l'agent d'hydrolyse et le cas échéant le catalyseur,
- séchage des granulés pour en extraire les solvants de synthèse et/ou de lavage par envoi en excès de CO₂ supercritique,

Ce procédé est particulier en ce que les étapes de granulation, maintien, lavage et séchage sont opérées à une pression supérieure au point critique du CO₂, et ces conditions sont maintenues entre ces étapes.

Grâce à ces dispositions, le procédé de fabrication d'aérogel peut se dérouler en continu, l'entrée en pression pouvant se faire à une étape ou les produits sont encore des fluides. En effet dès que les produits sont solides (dès après la granulation), une montée en pression ne peut plus se faire de façon continue. Grâce à l'invention, les produits ne nécessitent aucune montée en pression une fois qu'ils sont solides, ni dépressurisation, à part la dépressurisation finale. La durée de fabrication ainsi que les coûts en sont nettement réduits, et la qualité du produit en est améliorée, du fait d'une réduction des étapes risquées de changement d'état et de dépressurisation.

Selon d'autres caractéristiques :
- l'étape de mélange peut être également opérée à une pression supérieure au point critique du CO₂, ce qui permet une légère accélération de cette étape,
- lors de l'étape de séchage, les granulés chargés de solvant peuvent être soumis à un jet de CO₂ supercritique de sorte à les mettre dans des conditions de lit fluidisé, dans des conditions de température et de pression telles que le CO₂ est supercritique, et que les particules chargées de solvant sont plus lourdes que les particules chargées de CO₂, ceci permettant d'effectuer l'étape de séchage en continu, et d'accélérer l'étape de séchage,
- le solvant de synthèse et/ou de lavage peut être un solvant organique et l'étape de séchage être réalisée sous une pression comprise entre 100 et 200 bars et une température comprise entre 35 et 50°C, l'éthanol étant un produit peu cher et convenant au procédé, et les conditions entre 100 et 200 bars et 35 et 50 °C permettant qu'à certaines vitesses d'injection de CO₂ dans le lit fluidisé, les particules comprenant de l'éthanol ne s'envolent pas, alors que celles ne contenant que du CO₂ supercritique s'envolent par le haut de la tour, et peuvent être récupérées pour la suite du procédé,
- le procédé de fabrication d'aérogel peut comprendre, après l'étape de séchage, une étape de remplacement du CO₂ supercritique par un gaz inerte, de préférence l'azote, puis une étape de décompression, de préférence par paliers, cette étape supplémentaire permettant d'effectuer une décompression rapide, sans endommager les granulés d'aérogel,
- lors de l'étape de remplacement du CO₂ supercritique par un gaz inerte, les granulés chargés de CO₂ supercritique peuvent être soumis à un jet dudit gaz inerte, de sorte à les mettre dans des conditions de lit fluidisé, dans des conditions de température et de pression telles que le CO₂ est supercritique, et que les particules chargées de CO₂ supercritique sont plus lourdes que les particules chargées du gaz inerte, ceci permettant d'effectuer l'étape de remplacement du CO₂ supercritique par un gaz inerte en continu et d'accélérer cette étape.

La présente invention concerne également une installation pour la fabrication d'un aérogel en granulés à partir d'un précurseur, comportant :
- un réacteur de mélange,
- un dispositif de granulation, apte à former des granulés à partir d'un jet de liquide gélifié venant du réacteur de mélange, le cas échéant situé à l'intérieur du réacteur de vieillissement,
- un réacteur de vieillissement,
- un réacteur de lavage,
- un dispositif de séchage,
- un dispositif de décompression.

Cette installation est particulière en ce que le réacteur de vieillissement, le réacteur de lavage et le réacteur de séchage, ainsi que les moyens de transfert de produits entre ces réacteurs, sont configurés pour fonctionner et permettre le maintien desdits produits d'un réacteur à l'autre à une pression supérieure au point critique du CO₂.

Grâce à ces dispositions, l'installation permet de fabriquer des granulés d'aérogel en continu, l'entrée en pression pouvant se faire à une étape ou les produits sont encore des fluides.

Selon d'autres caractéristiques :
- le réacteur de mélange peut également être configuré pour fonctionner et permettre le maintien desdits produits d'un réacteur à l'autre à une pression supérieure au point critique du CO₂ ; ceci permet notamment de réduire encore le temps de réaction,
- l'installation peut comporter en outre une première tour à lit fluidisé configurée pour permettre le remplacement du solvant contenu dans les granulés par du CO₂ supercritique, ceci permettant d'effectuer le séchage des granulés en continu, et d'accélérer l'étape de séchage,
- l'installation peut comporter en outre une seconde tour à lit fluidisé configurée pour permettre le remplacement du CO₂ supercritique contenu dans les granulés par un gaz inerte pressurisé, de préférence de l'azote, permettant d'effectuer une décompression rapide, sans endommager les granulés d'aérogel.

La présente invention sera mieux comprise à la lecture de la description détaillée qui fait suite, en référence aux figures annexées dans lesquelles :

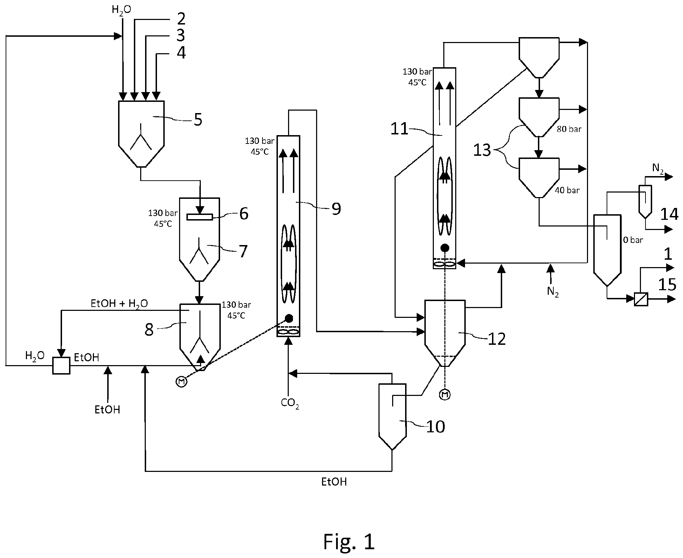

- La figure 1 est un diagramme illustrant une installation apte à mettre en œuvre le procédé selon l'invention.

Le procédé selon l'invention consiste en la production d'un aérogel 1 d'une façon continue. Pour ce faire, toutes les étapes de fabrication de l'aérogel 1 ont lieu sous une pression supérieure au point critique du CO₂ requise pour l'étape de séchage, depuis l'étape de granulation, à partir de laquelle l'aérogel devient solide, jusqu'au séchage. La production du précurseur, si elle est incluse au procédé, peut également être réalisée à une pression supérieure au point critique du CO₂. L'étape de mélange peut être ou non réalisée sous une pression supérieure au point critique du CO₂. Le point critique du CO₂ est situé à une température de l'ordre de 31°C, et une pression de l'ordre de 73 bars. Les produits de base de la production d'aérogel étant liquides, il est possible de les faire entrer sous pression d'une façon continue par exemple par le moyen d'une pompe. On évite ainsi de devoir mettre le gel (solides) sous pression à l'étape de séchage, ce qui ne peut se faire que par lots (procédé par « batchs »).

Le produit de base permettant de produire l'aérogel 1 est le précurseur. Pour la production d'un aérogel 1 de silice, le précurseur peut être produit à partir d'une source riche en silice telle que du sable. Il peut s'agir d'un alcoxysilane, et plus particulièrement du TMOS (orthosilicate de tétraméthyle) ou du TEOS (orthosilicate de tétraéthyle), qui peuvent être préférés à cause de la production annexe de méthanol et d'éthanol lors de leurs réactions respectives ; ou encore à partir d'un acide siliceux aqueux et ses oligomères (acides polysiliceux), encore appelés silicates de sodium. D'autres types de précurseurs peuvent être utilisés sans sortir du cadre de l'invention, afin de produire par exemple des aérogels 1 de carbone, d'alumine, d'oxyde de métal ou encore des précurseurs organiques comme de la cellulose, du polyuréthane ou des produits qui en sont dérivés.

La description qui suit fait référence à la production d'aérogel 1 de silice, mais il est facile pour l'homme du métier de transposer ces méthodes à la production d'autres types d'aérogel 1.

Le procédé selon l'invention peut comprendre la production d'un précurseur 2, auquel cas les produits nécessaire à la production du précurseur 2 sont introduits à l'aide d'une pompe.

Le précurseur 2 peut également être produit hors du procédé, auquel cas le précurseur 2 est introduit avant de subir le mélange.

Le précurseur 2 est alors mélangé avec un agent hydrolysant tel que l'eau, un solvant de synthèse 3 tel que l'éthanol, par exemple à 95%, le méthanol ou l'acétone, et le cas échéant un catalyseur 4. Ce mélange est opéré dans un réacteur de mélange 5. Deux réactions ont lieu : l'hydrolyse et la condensation. L'hydrolyse est provoquée par la présence de l'agent hydrolysant, et permet de former, à partir du précurseur 2, par exemple du dioxyde de silicium. Le dioxyde de silicium forme une solution colloïdale avec le solvant de synthèse 3. La condensation consiste en l'agglomération des particules colloïdale dans un réseau continu tridimensionnel, appelé gel ; on parle donc de gélification. Les vitesses relatives des réactions de condensation et d'hydrolyse peuvent être contrôlées par l'introduction du catalyseur 4. Le type de catalyseur 4 choisi, et plus précisément son pH, influe sur le type de réseau produit par condensation, et donc sur le type d'aérogel 1 comme produit final. De l'ammoniaque par exemple peut être choisi comme catalyseur 4 basique. Les réactions d'hydrolyse et de condensation peuvent avoir lieu simultanément, en mélangeant tous les produits, ou successivement, en préparant des solutions intermédiaires puis en mélangeant ces solutions intermédiaires ensemble ; on parle de synthèse en une étape ou en deux étapes.

Après le mélange survient l'étape de granulation. Le gel, lorsque sa viscosité a suffisamment augmenté, est coupé afin d'obtenir des granulés. Ceci est réalisé par un dispositif de granulation 6, comme par exemple un découpeur de jet (« jet cutter »), ou par une autre solution connue de l'homme du métier, par exemple en formant un goutte à goutte ou spray. Le type de dispositif de granulation 6 peut avoir une influence sur la granulométrie des granulés obtenus, le découpeur de jet produisant notamment des granulés plus gros, typiquement au-dessus de 50 microns et jusqu'au millimètre ou même au-dessus, et le spray des granulés plus fins, jusqu'à des dimensions de l'ordre de 5 microns ou même moins ; de tels granulés fins sont parfois aussi qualifié de poudre, mais ils seront également qualifiés de granulés dans le cadre de la présente invention.

Dans le cadre de la présente invention, l'étape de mélange peut être, ou non, réalisée sous une pression supérieure au point critique du CO₂ mais l'étape de granulation doit être réalisée sous une pression supérieure au point critique du CO₂. Ceci n'empêche pas leur bon déroulement, et tend à légèrement accélérer cette opération. La granulation sous haute pression est connue de l'homme du métier, elle ne pose pas de problème particulier.

L'étape suivant la granulation est l'étape de vieillissement. Après que le gel soit formé, il reste un grand nombre de particules qui n'ont pas encore terminé leur réaction. L'étape de vieillissement peut par exemple consister en une longue macération du gel dans une solution, dans un réacteur de vieillissement 7 qui peut comporter les mêmes solvant, agent hydrolysant et catalyseur qu'au cours de la synthèse. Après l'étape de vieillissement, sensiblement la totalité des particules a réagi, toutes les connexions entre molécules sont finalisées et le gel est alors plus solide. Le type de structure ainsi obtenue varie selon différents paramètres tels que le temps, le pH de la solution, le type de solvant de synthèse et la température.

Dans un mode préféré de réalisation de l'invention, les étapes de granulation et de vieillissement on lieu dans le même réacteur de vieillissement 7. Le gel est alors introduit par le haut du réacteur de vieillissement 7, ou il est coupé en granulés, avant de tomber dans le réacteur de vieillissement 7, où les réactions d'hydrolyse et de condensation peuvent se poursuivre.

Après l'étape de vieillissement, l'étape de lavage intervient afin d'éliminer des granulés les impuretés et les résidus de composés n'ayant pas réagi. La grande partie des impuretés est constituée de catalyseur et d'eau. L'étape de lavage est importante car la présence d'eau ou d'autres composants à l'étape de séchage peut causer une dégradation du réseau de l'aérogel 1 étant donné que le mélange pourrait ne pas être entièrement soluble dans le CO₂ supercritique, et donc un produit final de mauvaise qualité. Le lavage peut être effectué par immersion dans une solution de solvant de lavage dans un réacteur de lavage 8. Le solvant utilisé pour l'étape de lavage peut être de l'éthanol, ou un autre solvant soluble dans le CO₂ supercritique comme par l'exemple l'acétone, l'isopropanol ou le méthanol.

L'étape de lavage peut être l'occasion d'introduire un agent hydrophobisant, comme par exemple de l'hexaméthyldisiloxane (HMDSO) ou de l'hexaméthyldisilazane (HMDZ). Cet agent interagit avec la surface du gel afin de la rendre hydrophobe. Ceci est nécessaire pour certaines applications afin que l'aérogel 1 finalement produit ne se dégrade pas au contact de l'humidité de l'air. L'agent hydrophobisant peut également être introduit à l'étape de séchage ou même après.

Finalement, le solvant présent dans les granulés, par exemple l'éthanol, doit être retiré du gel afin d'obtenir un aérogel 1. Un séchage par simple évaporation ne produit pas un aérogel 1 de bonne qualité, car l'évaporation peut détruire les liaisons entre molécules à l'intérieur du réseau du gel du fait des tensions capillaires créées par un état biphasique. Afin de produire un aérogel 1 de bonne qualité, le procédé selon l'invention comprend une étape de séchage supercritique. Ce type de séchage permet d'éviter d'endommager l'aérogel pendant le séchage du fait qu'on évite un système biphasique et les forces capillaires qui y sont associées, et qui sinon causeraient la destruction partielle ou totale de la nanostructure du gel.

Plusieurs techniques de séchage par du CO₂ supercritique sont connues de l'homme du métier. Selon un mode préféré du procédé selon l'invention il est proposé le procédé suivant :
Dans la première phase du séchage supercritique, les granulés sont introduits par le bas dans une première tour à lit fluidisé 9 dans laquelle on injecte également par le bas du CO₂ à l'état supercritique. Le CO₂ est choisi car ses pression et température supercritiques sont relativement basses, et le solvant, par exemple de l'éthanol, se dissout dans le CO₂. L'utilisation d'un lit fluidisé permet un séchage rapide, où chaque particule est directement confrontée au jet de CO₂ venant dissoudre le solvant à évacuer.

Dans un lit fluidisé, on règle la vitesse de l'injection du gaz. Tant que cette vitesse est inférieure à une vitesse de fluidisation, les particules restent tassées les unes sur les autres. A partir de cette vitesse, et jusqu'à une vitesse de volatilisation, les particules sont soulevées par le jet de gaz, mobiles, mais ne s'envolent pas. C'est cet état qui permet au CO₂ d'entrer très rapidement en contact avec chacune des particules. Au delà de la vitesse de volatilisation, les particules sont entrainées par le jet de gaz, et s'évacuent par le haut de la tour.

La vitesse de volatilisation n'est pas la même si la particule contient de l'éthanol ou du CO₂ supercritique, à la température et la pression choisies pour le lit fluidisé. Pour la fabrication d'un aérogel 1 de silice, et un éthanol comme solvant, une pression de 130 bars et une température de 45°C conviennent. On utilise cette différence de vitesse de volatilisation pour régler la vitesse du lit fluidisé de telle sorte que les particules comprenant de l'éthanol ne s'envolent pas, alors que celles ne contenant que du CO₂ s'envolent par le haut de la tour, et peuvent être récupérées pour la suite du procédé. Le CO₂ supercritique est évacué vers un décanteur puis un séparateur d'avec le solvant. Les granulés contenant l'éthanol restent dans le premier lit fluidisé 9, et continuent à être confrontées au jet de CO₂, jusqu'à ce que l'éthanol soit remplacé par du CO₂, puis elles s'envolent.

Pour la fabrication d'un aérogel 1 de silice, et un éthanol comme solvant, le lit fluidisé peut être réglé par exemple à 130 bars et 45°. De telles conditions permettent d'avoir une plage de vitesse favorable pour toutes les tailles de particules intéressant la production.

En sortie du premier lit fluidisé 9, le CO₂ supercritique mélangé à de l'éthanol entre dans un séparateur CO₂/éthanol 10, ce qui permet de réinjecter le CO₂ supercritique pur dans le lit fluidisé 9 et ainsi, de progressivement remplacer tout le solvant par du CO₂ supercritique. L'éthanol peut quant à lui être réinjecté dans l'étape de mélange ou de lavage.

Dans la seconde phase du séchage supercritique, les granulés sont injectés dans une seconde tour à lit fluidisé 11, dans lequel on injecte de l'azote à l'état supercritique, ou tout autre gaz inerte, dans les conditions fixées, tel que l'air sec, l'argon, le krypton. Le second lit fluidisé 11 est paramétré de façon à ce que tout comme le CO₂ a remplacé l'éthanol dans le premier lit fluidisé 9, l'azote remplace le CO₂ dans le second lit fluidisé 11.

L'azote peut être produit avec de l'air dans une unité de production d'azote faisant partie du procédé selon l'invention ; ou il peut être produit hors de l'installation. Il est décrit comme incompressible dans le cadre de la présente invention du fait qu'il est beaucoup moins compressible que le CO₂.

Un décanteur 12 peut être utilisé en sortie du premier lit fluidisé 9, afin de séparer le CO₂ supercritique, à renvoyer dans le premier lit fluidisé 9, des granulés chargés en CO₂, à renvoyer dans le second lit fluidisé 11. Dans un mode préféré de réalisation de l'invention, ce même décanteur 12 est également utilisé pour séparer le CO₂ supercritique et l'azote supercritique en sortie du second lit fluidisé 11, à renvoyer respectivement dans le premier lit fluidisé 9 et dans le second lit fluidisé 11. Dans les conditions de CO₂ supercritique, la densité de ces deux gaz est très différente et la décantation immédiate.

En sortie du second lit fluidisé 11, l'aérogel doit être dépressurisé. L'azote étant beaucoup moins compressible que le CO₂, la dépressurisation n'endommage pas l'aérogel et peut se faire plus rapidement que si du CO₂ était encore présent dans les granulés. La phase de dépressurisation ne prend ainsi que quelques minutes, alors qu'une dépressurisation de l'aérogel comprenant encore du CO₂ prend plusieurs heures, puisque la vitesse de dépressurisation doit être inférieure à 0,3 bar par minute. La dépressurisation est faite dans un dispositif de décompression 13. La dépressurisation peut être directe ou se faire en cascade dans des réacteurs de dépressurisation 13.

A chaque palier, l'azote peut être récupéré et envoyé dans le second lit fluidisé 11. En sortie du premier palier, le CO₂ résiduel peut être renvoyé dans le décanteur 12.

Revenu dans les conditions atmosphériques, on sépare l'azote par des moyens connus, et on récupère l'aérogel 1. On peut séparer les poussières 14 ou granulés trop fins 15 et les utiliser pour certaines applications particulières. Il reste alors l'aérogel 1 en granulé dont la granulométrie correspond à celle qui est souhaitée.

## Revendications

1. Procédé de fabrication d'un aérogel (1) en granulés à partir d'un précurseur (2), comportant les étapes suivantes :
- mélange du précurseur (2) avec un solvant de synthèse (3) et un agent d'hydrolyse tel que l'eau, et le cas échéant un catalyseur (4), pour obtenir un gel,
- granulation du produit obtenu, en particulier par découpe d'un jet dudit gel, pour obtenir des granulés,
- maintien des granulés en contact avec le solvant de synthèse (3) et l'agent d'hydrolyse,
- lavage des granulés par ajout d'un solvant de lavage pour en extraire notamment l'agent d'hydrolyse et le cas échéant le catalyseur (4),
- séchage des granulés pour en extraire les solvants de synthèse (3) et/ou de lavage par envoi en excès de CO2 supercritique,
**caractérisé en ce que** les étapes de granulation, maintien, lavage et séchage sont opérées à une pression supérieure au point critique du CO2, et ces conditions sont maintenues entre ces étapes.

2. Procédé selon la revendication précédente, dans lequel l'étape de mélange est également opérée à une pression supérieure au point critique du CO2.

3. Procédé selon l'une des revendications précédentes, dans lequel, lors de l'étape de séchage, les granulés chargés de solvant sont soumis à un jet de CO2 supercritique de sorte à les mettre dans des conditions de lit fluidisé, dans des conditions de température et de pression telles que le CO2 est supercritique, et que les particules chargées de solvant sont plus lourdes que les particules chargées de CO2.

4. Procédé selon la revendication précédente, dans lequel la vitesse du lit fluidisé est réglée de telle sorte que les particules chargées de solvant ne s'envolent pas et restent confrontées au jet de CO2 jusqu'à ce que le solvant soit remplacé par du CO2, alors que celles ne contenant que du CO2 s'envolent par le haut de la tour et peuvent être récupérées pour la suite du procédé.

5. Procédé selon la revendication précédente, dans lequel le solvant est de l'éthanol.

6. Procédé selon la revendication précédente, dans lequel le solvant de synthèse (3) et/ou de lavage est un solvant organique et l'étape de séchage est réalisée sous une pression comprise entre 100 et 200 bars et une température comprise entre 35 et 50°C.

7. Procédé selon l'une des revendications précédentes, comprenant, après l'étape de séchage, une étape de remplacement du CO2 supercritique par un gaz inerte, de préférence l'azote, puis une étape de décompression, de préférence par paliers.

8. Procédé selon la revendication précédente, dans lequel, lors de l'étape de remplacement du CO2 supercritique par un gaz inerte, les granulés chargés de CO2 supercritique sont soumis à un jet dudit gaz inerte, de sorte à les mettre dans des conditions de lit fluidisé, dans des conditions de température et de pression telles que le CO2 est supercritique, et que les particules chargées de CO2 supercritique sont plus lourdes que les particules chargées du gaz inerte.

9. Installation pour la fabrication d'un aérogel (1) en granulés à partir d'un précurseur (2), comportant :
- un réacteur de mélange (5),
- un dispositif de granulation (6), apte à former des granulés à partir d'un jet de liquide gélifié venant du réacteur de mélange (5), le cas échéant situé à l'intérieur du réacteur de vieillissement (7),
- un réacteur de vieillissement (7),
- un réacteur de lavage (8),
- un dispositif de séchage,
- un dispositif de décompression (13),
**caractérisée en ce que** le réacteur de vieillissement (7), le réacteur de lavage (8) et le dispositif de séchage, ainsi que les moyens de transfert de produits entre ces réacteurs, sont configurés pour fonctionner et permettre le maintien desdits produits d'un réacteur à l'autre à une pression supérieure au point critique du CO2.

10. Installation selon la revendication précédente, dans laquelle le réacteur de mélange (5) est également configuré pour fonctionner et permettre le maintien desdits produits d'un réacteur à l'autre à une pression supérieure au point critique du CO2.

11. Installation selon la revendication précédente, comportant en outre une première tour à lit fluidisé (9) configurée pour permettre le remplacement du solvant contenu dans les granulés par du CO2 supercritique.

12. Installation selon la revendication précédente, dans laquelle ladite tour comporte un moyen d'injection de CO2 supercritique par le bas, un moyen d'entrée des granulés chargés de solvant par le bas, et un moyen de sortie des granulés chargés de CO2 par le haut.

13. Installation selon la revendication précédente, comportant en outre une seconde tour à lit fluidisé (11) configurée pour permettre le remplacement du CO2 supercritique contenu dans les granulés par un gaz inerte pressurisé, de préférence de l'azote.

14. Installation selon la revendication précédente, dans laquelle ladite tour comporte un moyen d'injection de CO2 supercritique par le bas, un moyen d'entrée des granulés chargés de CO2 par le bas, et un moyen de sortie des granulés chargés de gaz inerte pressurisé par le haut.

## Patentansprüche

1. Verfahren zur Herstellung eines körnigen Aerogels (1) aus einem Vorprodukt (2), umfassend die folgenden Schritte:
- Mischen des Vorprodukts (2) mit einem Syntheselösungsmittel (3) und einem Hydrolysemittel wie Wasser und gegebenenfalls einem Katalysator (4), um ein Gel zu erhalten,
- Granulierung des erhaltenen Produkts, insbesondere durch Schneiden eines Strahls des genannten Gels, um Granulat zu erhalten,
- das Granulat in Kontakt mit dem Syntheselösungsmittel (3) und dem Hydrolysemittel zu halten,
- Waschen des Granulats durch Zugabe eines Waschlösungsmittels, um daraus insbesondere das Hydrolysemittel und gegebenenfalls den Katalysator zu extrahieren (4),
- Trocknung der Granulate zur Extraktion der Synthese- (3) und/oder Wasch- Lösungsmittel durch Überschuss-Sendung von überkritischem CO2,
**dadurch gekennzeichnet, dass** die Schritte des Granulierens, Haltens, Waschens und Trocknens bei einem Druck oberhalb des kritischen Punktes von CO2 durchgeführt werden und diese Bedingungen zwischen diesen Schritten aufrechterhalten werden.

2. Ein Verfahren nach dem vorstehenden Anspruch, bei dem der Mischschritt ebenfalls bei einem Druck oberhalb des kritischen Punktes von CO2 durchgeführt wird.

3. Ein Verfahren nach einem der vorstehenden Ansprüche, bei dem in der Trocknungsstufe die lösungsmittelbeladenen Granulate einem Strahl von überkritischem CO2 ausgesetzt werden, um sie in Wirbelbettkonditionen zu bringen, unter solchen Temperatur- und Druckbedingungen dass das CO2 überkritisch ist und die lösungsmittelbeladenen Partikel schwerer sind als die CO2-beladenen Partikel.

4. Ein Verfahren nach dem vorstehenden Anspruch, bei dem die Wirbelbettgeschwindigkeit so gesteuert wird, dass die lösungsmittelbeladenen Partikel nicht wegfliegen und mit dem CO2-Strahl solange konfrontiert bleiben, bis das Lösunsmittel durch CO2 ersetzt wird, während diejenigen, die nur CO2 enthalten, über die Turmspitze wegfliegen und zur weiteren Verarbeitung zurückgewonnen werden können.

5. Ein Verfahren nach dem vorstehenden Anspruch, bei dem das Lösungsmittel Ethanol ist.

6. Verfahren nach dem vorstehenden Anspruch, wobei die Synthese- (3) und/oder das Wasch- Lösungsmittel ein organisches Lösungsmittel ist und der Trocknungsschritt unter einem Druck zwischen 100 und 200 bar und einer Temperatur zwischen 35 und 50°C durchgeführt wird.

7. Verfahren nach einem der vorstehenden Ansprüche, das nach dem Trocknungsschritt einen Schritt des Ersetzens von überkritischem CO2 durch ein Inertgas, vorzugsweise Stickstoff, gefolgt von einem Dekompressionsschritt, vorzugsweise in Stufen, umfasst.

8. Verfahren nach dem vorstehenden Anspruch, wobei in dem Schritt des Ersetzens von überkritischem CO2 durch ein Inertgas die mit überkritischem CO2 beladenen Granulate einem Strahl des Inertgases ausgesetzt werden, um sie in Wirbelbettbedingungen zu bringen, unter solchen Temperatur- und Druckbedingungen dass das CO2 überkritisch ist und die mit überkritischem CO2 beladenen Teilchen schwerer sind als die mit Inertgas beladenen Teilchen.

9. Eine Anlage zur Herstellung eines körnigen Aerogels (1) aus einem Vorprodukt (2), wobei die Anlage beinhaltet:
- einen Mischreaktor (5),
- eine Granulationsvorrichtung (6), die in der Lage ist, aus einem Strahl gelierter Flüssigkeit, die aus dem Mischreaktor (5) kommt, der sich möglicherweise im Inneren des Alterungsreaktors (7) befindet, Granulat zu bilden,
- ein Alterungsreaktors (7),
- einen Waschreaktor (8),
- eine Trocknungsvorrichtung,
- eine Druckentlastungsvorrichtung (13),
**dadurch gekennzeichnet, dass** der Alterungsreaktor (7), der Waschreaktor (8) und die Trocknungsvorrichtung sowie die Mittel zur Übertragung von Produkten zwischen diesen Reaktoren so konfiguriert sind, dass sie funktionieren und die Aufrechterhaltung der genannten Produkte von einem Reaktor zum anderen bei einem Druck über dem kritischen Punkt von CO2 ermöglichen.

10. Anlage nach dem vorstehenden Anspruch, wobei der Mischreaktor (5) auch so konfiguriert ist, dass er betrieben wird und die Aufrechterhaltung der genannten Produkte von einem Reaktor zum anderen ermöglicht, bei einem Druck, der höher als der kritische Punkt von CO2 ist.

11. Anlage nach dem vorstehenden Anspruch, die ferner einen ersten Wirbelbettturm (9) umfasst, der so konfiguriert ist, dass das in den Granulaten enthaltene Lösungsmittel durch überkritisches CO2 ersetzt werden kann.

12. Anlage nach dem vorstehenden Anspruch, wobei der Turm Mittel zum Einspritzen von überkritischem CO2 von unten, Mittel zum Einlass der lösungsmittelbeladenen Granulate von unten und Mittel zum Auslass der CO2-beladenen Granulate von oben umfasst.

13. Eine Anlage nach dem vorstehenden Anspruch, die ferner einen zweiten Wirbelbettturm (11) umfasst, der so konfiguriert ist, dass er den Ersatz des in den Granulaten enthaltenen überkritischen CO2 durch ein unter Druck stehendes Inertgas, vorzugsweise Stickstoff, ermöglicht.

14. Anlage nach dem vorstehenden Anspruch, wobei der Turm Mittel zum Einspritzen von überkritischem CO2 von unten, Mittel zum Einlass der mit CO2 beladenen Granulate von unten und Mittel zum Auslass der mit unter Druck stehendes Inertgas beladenen Granulate von oben umfaßt.

## Claims

1. Method for manufacturing a granulated aerogel (1) from a precursor (2), comprising the following steps:
- mixing the precursor (2) with a synthetic solvent (3) and a hydrolysis agent, such as water, and if appropriate a catalyst (4), in order to obtain a gel,
- granulating the resulting product, in particular by cutting a jet of said gel, to produce granules,
- maintaining the granules in contact with the synthetic solvent (3) and the hydrolysis agent,
- washing the granules by adding a washing solvent in order to extract therefrom, in particular, the hydrolysis agent and, if appropriate, the catalyst (4),
- drying the granules in order to extract the synthetic solvents (3) and/or washing solvents by sending in excess supercritical CO2,
**characterized in that** the granulating, maintaining, washing and drying steps are carried out at a pressure higher than that of the critical point of CO2, and these conditions are maintained between these steps.

2. Method according to the previous claim, in which the mixing step is also carried out at a pressure higher than that of the critical point of CO2.

3. Method according to one of the previous claims, in which, in the drying step, the solvent-laden granules are subjected to a jet of supercritical CO2 so as to bring them to fluidized bed conditions, under conditions of temperature and pressure such that the CO2 is supercritical, and the solvent-laden particles are heavier than the CO2 -laden particles.

4. Method according to the previous claim, in which the fluidized bed rate is controlled so that the solvent-laden particles do not fly away and remain confronted with the CO2 jet until the solvent is replaced by CO2, whereas those containing only CO2 fly away from the top of the tower and can be recovered for further processing.

5. Method according to the previous claim, in which the solvent is ethanol.

6. Process according to the previous claim, wherein the synthetic solvent (3) and/or washing solvent is an organic solvent and the drying step is carried out under a pressure of between 100 and 200 bar and a temperature of between 35 and 50°C.

7. Method according to one of the previous claims, comprising, after the drying step, a step of replacing supercritical CO2 by an inert gas, preferably nitrogen, followed by a decompression step, preferably in stages.

8. Method according to the previous claim, in which, in the step of replacing supercritical CO2 with an inert gas, the granules loaded with supercritical CO2 are subjected to a jet of said inert gas so as to bring them to fluidized bed conditions, under conditions of temperature and pressure such that the CO2 is supercritical, and the granules loaded with supercritical CO2 are heavier than the particles loaded with inert gas.

9. Installation for the production of a granulated aerogel (1) from a precursor (2), having :
- a mixing reactor (5),
- a granulating device (6), capable of forming granules from a jet of gelled liquid coming from the mixing reactor (5), possibly located inside the ageing reactor (7),
- an ageing reactor (7),
- a washing reactor (8),
- a drying device,
- a pressure relief device (13),
**characterized in that** the ageing reactor (7), the washing reactor (8) and the drying device, as well as the means for transferring products between these reactors, are configured to operate and allow the maintenance of said products from one reactor to another at a pressure above the critical point of CO2.

10. Installation according to the previous claim, wherein the mixing reactor (5) is also configured to operate and allow the maintenance of said products from one reactor to another at a pressure higher than the critical point of CO2.

11. Installation according to the previous claim, further comprising a first fluidized bed tower (9) configured to allow the replacement of the solvent contained in the granules by supercritical CO2.

12. Installation according to the previous claim, in which said tower comprises means for injecting supercritical CO2 from below, means for inlet of the solvent-laden granules from below, and means for outlet of the CO2-laden granules from above.

13. Installation according to the previous claim, further comprising a second fluidized bed tower (11) configured to allow the replacement of the supercritical CO2 contained in the granules by a pressurized inert gas, preferably nitrogen.

14. Installation according to the previous claim, wherein said tower comprises means for injecting supercritical CO2 from below, means for inlet of the CO2-laden granules from below, and means for outlet of the granules loaded with pressurized inert gas from above.
